# EUROPÄISCHE PATENTSCHRIFT

(11) **EP 2 964 373 B1**
(45) Veröffentlichungstag und Bekanntmachung des Hinweises auf die Patenterteilung: **14.06.2017**
(21) Anmeldenummer: 14711929.1
(22) Anmeldetag: 03.03.2014
(51) Int. Cl.: B01F 3/10, B01F 7/04, B01F 13/04, B01F 15/00, B29B 7/44, B29B 7/48, B29B 7/72

(54) **VERFAHREN UND VORRICHTUNG ZUM BEHANDLEN VON VISKOS-PASTÖSEN MASSEN**
METHOD AND APPARATUS FOR PROCESSING VISCOUS, PASTE-LIKE MATERIALS
PROCÉDÉ ET APPAREIL DE TRAITEMENT DE MATIÈRES VISCO-PÂTEUSES

(30) Priorität: 04.03.2013 DE 102013102099
(43) Veröffentlichungstag der Anmeldung: 13.01.2016
(73) Patentinhaber: LIST Technology AG, 4422 Arisdorf (CH)
(72) Erfinder: ALTHAUS, Martin, CH-4436 Oberdorf (CH); HAFNER, Roger, DE-79426 Buggingen (DE); WITTE, Daniel, 79639 Grenzach-Wyhlen (DE); GÜDEMANN, Karsten, 79400 Kandern (DE)
(74) Vertreter: Patentanwälte und Rechtsanwalt Weiß, Arat & Partner mbB
(86) Internationale Anmeldenummer: PCT/EP2014/054058
(87) Internationale Veröffentlichungsnummer: WO 2014/135489

(56) Entgegenhaltungen:
- EP-A1- 0 451 747
- WO-A2-2014/023738
- DE-A1- 3 502 437
- DE-A1- 4 303 852
- US-A- 4 361 081
- US-A- 4 504 150
- US-A- 4 508 454

## Beschreibung

Die Erfindung betrifft ein Verfahren zum Behandeln von insbesondere viskos-pastösen Massen in einem Gehäuse mit Knetelementen, wobei zumindest ein Knetelement überwacht wird.

### Stand der Technik

Derartige Vorrichtungen werden auch als Mischkneter bezeichnet. Sie dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, Wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxydantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In Mischknetern kann ein Entgasen und/oder Devolatilisieren stattfinden. Angewendet wird dies auf Polymerschmelzen, nach Kondensation von Polyester oder Polyamidschmelzen, auf Spinnlösungen für synthetische Fasern und auf Polymer- oder Elastomergranulate bzw. -pulver im festen Zustand.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimide, Thermoplaste, Elastomere, Silikone, Harnstoffharze, Phenolharze, Detergentien und Düngemittel.

Stattfinden kann auch eine Polymerisationsreaktion, ebenfalls meist kontinuierlich. Dies wird angewendet auf Polyakrylate, Hydrogele, Polyole, thermoplastische Polymere, Elastomere, syndiotaktisches Polysterol und Polyacrylamide.

Ganz allgemein können im Mischkneter Reaktionen fest, flüssig und mehrphasige Reaktionen stattfinden. Dies gilt vor allem für Backreaktionen, bei der Behandlung von Flusssäure, Stearaten, Zyanaten, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State-Nachkondensation findet bei der Herstellung bzw. Behandlung von Polyester und Polyamiden statt, ein kontinuierliches Anmaischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Coagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Im wesentlichen werden einwellige und zweiwellige Mischkneter unterschieden. Ein einwelliger Mischkneter wird beispielsweise in der EP-A1-0 451 747 beschrieben. Mehrwellige Misch- und Knetmaschinen werden in der CH-A 506 322, der EP 0 517 068 B, der DE 199 40 521 A1 oder der DE 101 60 535 beschrieben ist. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Aus der US 4 504 150 A ist ein Extruder zum Kneten und Extrudieren eines synthetischen Materials bekannt, wobei eine entsprechende Extruderschnecke drehbar in einem zylindrischen Gehäuse angeordnet ist. Zwischen die Schneckengänge sind Stifte eingesetzt, mit denen der Massefluss überwacht werden soll. Dabei wird eine Deformation dieser Stifte ermittelt. Ähnliches wird in der DE 35 02 437 A1 gezeigt.

Die US 4 508 454 A, die ein Verfahren gemäß dem Oberbegriff des Anspruchs 1 und eine Vorrichtung gemäß dem Oberbegriff des Anspruchs 5 offenbart, zeigt ebenfalls einen Extruder, wobei sich entsprechende Stifte in Ausnehmungen erstrecken, welche in die Helix der Extruderschnecke eingeformt sind. Hierbei soll ein Brechen der Stifte ermittelt werden, was z. B. durch Metallpartikel in dem Extrudat geschehen kann.

Ein Mischkneter der erfindungsgemässen Art ist, in der DE 43 03 852 A1 gezeigt. In dieser Schrift wird die Überwachung von Knetelementen auf Bruch od. dgl. Beschädigungen beschrieben. Dabei kann es sich bspw. um ein in dem Knetelement angeordnetes Röhrchen handeln, welches mit Druck beaufschlagt oder evakuiert wird. Dabei wird dieser Druck bzw. das Vakuum überwacht.

### Aufgabe

Aufgabe der vorliegenden Erfindung ist es, den Betrieb einer derartigen erfindungsgemässen Vorrichtung sicherer und störungsfreier auszugestalten.

### Lösung der Aufgabe

Zur Lösung der Aufgabe führt, dass durch die Überwachung ein Steuersignal generiert wird, mit dessen Hilfe sich der Zustand des Knetelements eindeutig zuordnen lässt, wobei das Steuersignal aus einem Abfall des Druckes eines Druckmittels generiert und bei Abfall des Druckes Druckmittel zugeführt wird, um einen vorbestimmten Druck aufrechtzuerhalten.

Der Begriff Knetelement ist im vorliegenden Fall welt zu verstehen. Dazu gehören nicht nur die sogenannten Knetgegenhaken, die meist im Gehäuse festliegen, sondern auch Knetelemente, die mit der Welle mitdrehen, ja sogar Scheibenelemente, auf denen Knetbarren festgelegt sind. All diese Elemente sollen überwacht werden, und zwar bevorzugt einzeln, so dass sie auch einzeln, sofern sie beispielsweise beschädigt sind, ausgetauscht werden können. Hierzu sollen sie bevorzugt lokalisiert werden. Es genügt, wenn das überwachte Knetelement über eine Leitung oder auch drahtlos mit einer Überwachungseinrichtung verbunden ist, so dass die Überwachungseinrichtung auch das einzelne Knetelement identifiziert, welches ein entsprechendes Signal abgibt.

Auch für die Überwachung soll keine Grenze gesetzt sein. Im vorliegenden Fall bezieht sich die Überwachung vor allem auf Risse in dem Knetelement. Bei Rissbildung kann angenommen werden, dass in naher Zukunft das Knetelement bricht.

Zum Zwecke der Ermittlung einer Rissbildung soll ein entsprechendes Knetelement von zumindest einem Kanal zumindest teilweise durchzogen sein, wobei sich in dem Kanal ein Druckmittel befindet. Wo der Kanal in dem Knetelement angeordnet wird, ist von untergeordneter Bedeutung. Es kann sich auch um ein ganzes Kanalnetz handeln, welches unter Druck steht. Sobald sich ein Riss bildet, entweicht durch diesen Riss das Druckmittel und zeigt an, dass eine Rissbildung stattgefunden hat. Zu diesem Zweck ist der Kanal mit einer Druckmittelquelle verbunden. Als Druckmittel kommt vor allem ein Gas, und hier insbesondere Stickstoff in Betracht. Es kann sich aber auch um ein flüssiges Mittel handeln. Auch dies soll von der vorliegenden Erfindung umfasst sein.

Erfindungsgemäss wird das Druckmittel zum Knetelement hin überwacht und insbesondere zwischen einer normalen Leckage und einem Ereignis unterschieden, welches eine Aktion einer Steuerung erfordert, beispielsweise ein Bruch eines Knetelementes, das zu einem Abschalten des Mischkneters führen muss. Bei diesem Ausführungsbeispiel ist in die Druckmittelleitung ein Durchflusssensor eingeschaltet, welcher die Menge des Druckmittels über die Zeit ermittelt. Das durch eine normale Leckage entstehende Druckgefälle wird durch Zufuhr von weiterem Druckmittel ausgeglichen. Sobald diese Zufuhr aber einen vorbestimmten Durchflusswert innerhalb einer vorbestimmten Zeiteinheit überschreitet, ist dies ein Zeichen dafür, dass möglicherweise ein Bruch des Knetelementes oder zumindest eine Rissbildung vorliegt. In diesem Fall wird dann ein Alarm ausgelöst bzw. eine entsprechende Steuereinheit dazu veranlasst, den Mischkneter abzuschalten oder anderweitig zu beeinflussen. Als Aktion ist auch das Abschalten, Anschalten oder Beeinflussen von Ein- und Austragsorgane für Edukt oder Produkt in oder aus dem Kneterraum denkbar oder auch das Ein- oder Abschalten oder sonstige Beeinflussung der Beheizung der beheizbaren Elemente des Mischkneters.

Die vorliegende Erfindung bezieht sich nicht nur auf ein entsprechendes Verfahren zum Überwachen der Knetelemente, sondern auch auf eine Vorrichtung, die mit derartigen Knetelementen arbeitet. Dies sind vor allem die sogenannten Mischkneter.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine schematisch dargestellte Draufsicht auf eine erfindungsgemässe Vorrichtung zum Behandeln von viskos-pastösen Massen;
**Figur 2** eine perspektivische Ansicht eines erfindungsgemässen Knetelements mit Überwachungselementen;
**Figur 3** eine blockschaltbildliche Darstellung eines Ausführungsbeispiels einer Überwachungseinrichtung.

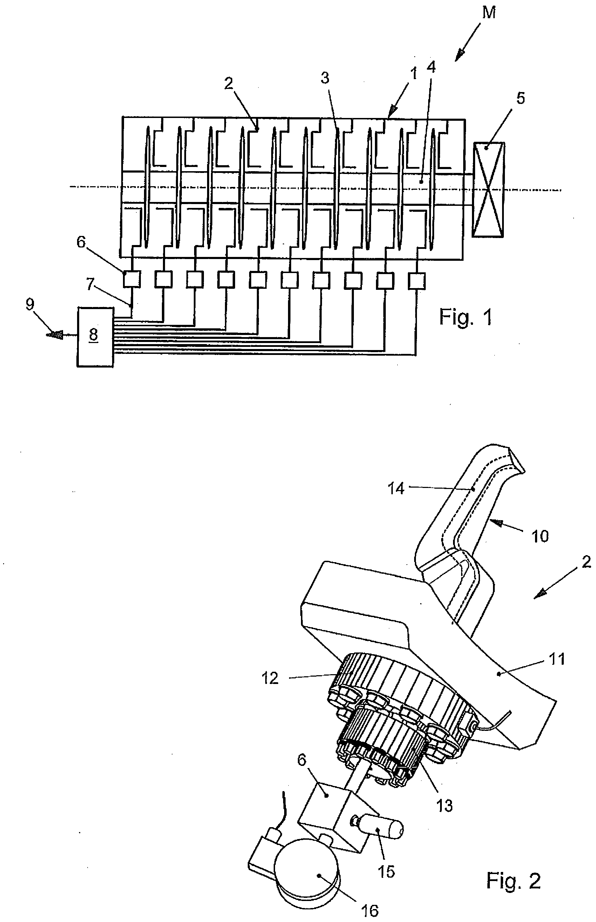

Von einem Mischkneter M, wie er deutlicher in beispielsweise der DE 43 03 852 A1 gezeigt ist, ist in Figur 1 ein Gehäuse 1 dargestellt. In diesem Gehäuse 1 befinden sich Knetelemente 2, die C-förmig ausgebildet sind. Die Knetelemente 2 wirken mit weiteren scheibenförmigen Knetelementen 3 zusammen, die auf einer Welle 4 angeordnet sind. Dieser Welle 4 ist ein Antrieb 5 zugeordnet.

Für eine Reihe von Knetelementen 2 ist ferner jeweils ein Ventilblock 6 angedeutet, der über eine Leitung 7 mit einer Überwachungseinrichtung 8 verbunden ist. Diese Überwachungseinrichtung 8 kann, wie durch den Pfeil 9 angedeutet, wiederum mit einer zentralen Kontrolleinrichtung verbunden sein.

Das Knetelement 2 besteht gemäss Figur 2 im wesentlichen aus einem Knetkörper 10, der auf einem Gehäuseflansch 11 aufsitzt. Er ist ferner mit einem Drehmomentsensor 12 verbunden, dem eine Spanneinrichtung 13 zugeordnet ist.

In dem Knetkörper 10 befindet sich, gestrichelt angedeutet, zumindest ein Kanal 14, der nach der Spanneinrichtung 13 mit dem Ventilblock 6 in Wirkverbindung steht. Dieser Kanal 14 kann mittels einem Druckmedium aus einem Gaszylinder 15 mit einem Druckmittel beaufschlagt werden. Der Druck in dem Kanal 14 wird über ein Druckmessgerät 16, insbesondere ein Manometer, überwacht.

Die Funktionsweise der vorliegenden Erfindung ist folgende:
In dem Gehäuse 1 befindet sich bevorzugt eine Mehrzahl von Knetelementen 2, wie sie in Figur 2 dargestellt sind. Der Knetkörper 10 selbst ragt in das Innere des Gehäuses ein und ist durch das Gehäuse hindurch mittels dem Gehäuseflansch 11 mit dem ausserhalb des Gehäuses liegenden Drehmomentsensor 12, der Spanneinrichtung 13, dem Ventilblock 6 und dem Gaszylinder bzw. Manometer verbunden. Über den Gaszylinder 15 wird im Kanal 14 ein Druck aufrechterhalten. Im Falle einer Beschädigung des Knetkörpers 10 entweicht durch einen möglichen Riss hindurch das Druckgas in das Innere des Gehäuses, so dass sich der Druck in dem Kanal 14 reduziert. Dies wird durch das Manometer 16 ermittelt, welches an die Überwachungseinrichtung 8 ein Signal abgibt. Natürlich kann hier auch eine bestimmte Grenze festgelegt werden, unter der erst der Druckschalter anspricht. Im übrigen soll das Volumen, welches überwacht wird, möglichst klein gewählt werden, um ein schnelles sensibles Überwachen sicherzustellen.

Nunmehr kann über die entsprechende Leitung 7 das Knetelement 2 identifiziert werden, welches möglicherweise einen Schaden aufweist. Das beschädigte Knetelement kann nun entfernt und geblindet werden, während die Anlage weiter in Betrieb ist. Der Mischkneter wird ganz normal weitergefahren und zwar ohne Stillstand.

Ist mit dem Knetkörper auch ein Temperatursensor verbunden, so kann die Temperatur insbesondere in der zu behandelnden Masse ermittelt werden. Diese Temperatur dient dann einer gezielten Steuerung der Temperaturführung der Behandlung.

Es kann auch vorkommen, dass es zu einer nicht gewünschten Verformung des Knetelements ohne Rissbildung kommt. Erfindungsgemäss ist hier vorgesehen, dass über entsprechende Dehnmessstreifen bzw. auch den Drehmomentsensor 12 die Verformung ermittelt und ggf. schadhafte Knetelement ausgetauscht werden.

Ein weiterer Gedanke der Erfindung, für den auch selbständig Schutz begehrt wird, bezieht sich darauf, dass über diese so ausgestalteten Knetelemente Mittel, die zur Behandlung der viskos-pastösen Masse verwendet werden sollen, in das Gehäuse 1 eingespeist werden.

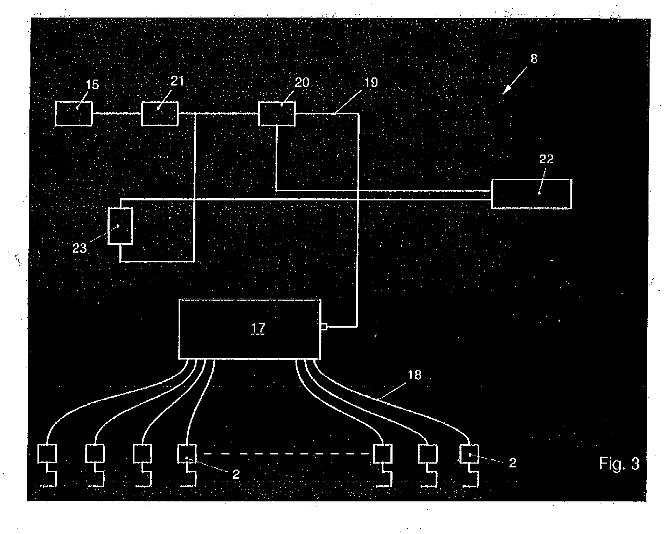

Ein Ausführungsbeispiel einer erfindungsgemässen Überwachungseinrichtung 8 ist in Figur 3 näher gezeigt. Hier sind die Knetelemente 2 mit einem gemeinsamen Ventilblock 17 verbunden. Hierzu ist jeweils eine Zuleitung 18 für ein Druckmittel vorgesehen. An den Ventilblock 17 schliesst eine Druckmittelleitung 19 an, in die zur Druckquelle 15 hin ein Durchflusssensor 20 und ein Druckminderer 21 eingeschaltet sind. Der Durchflusssensor 20 ist mit einem zentralen Steuergerät 22 verbunden, ebenso wie auch ein Drucksensor 23, der zwischen dem Druckminderer 21 und dem Durchflusssensor 20 in der Druckmittelleitung 19 überprüft, ob ein Druckmittel vorhanden ist.

In der Zeichnung ist nicht näher gezeigt, dass das Steuergerät selbstverständlich auch mit dem Druckquellenanschluss 15 und dem Ventilblock 17 sowie möglicherweise vorhandenen Steuerventilen bzw. Sensoren bei den Knetelementen 2 verbunden ist.

Die Funktionsweise dieser Überwachungseinrichtung ist folgende:
Über den Druckmittelanschluss an die Druckquelle 15 steht an dem Druckminderer 21 ein Stickstoffgas mit ca. 4 bar an. Durch den Druckminderer 21 erfolgt eine Minderung des Druckes auf beispielsweise 1 bar. Der Stickstoff fliesst durch den Durchflusssensor 20 und die Druckmittelleitung 19 in den Ventilblock 17 und wird dort auf die einzelnen Knetelemente 2 verteilt.

Findet ein Druckabfall statt, so kann dieser auf eine normale Leckage zurückzuführen sein oder aber auf einen Bruch od. dgl. des Knetelementes. Zum Zwecke der Trennung beider Vorfälle und zur Vermeidung von Falschalarm wird in der Druckmittelleitung 19 immer ein vorbestimmter, bevorzugt gleichbleibender Druck aufrecht erhalten, aber der Durchfluss, insbesondere bezogen auf die Durchflusszeit überwacht. Bei einer normalen Leckage findet ein sehr geringer Durchfluss innerhalb einer bestimmten Zeiteinheit statt. Ein Alarm wird erst dann ausgelöst, wenn sich der Druchfluss z.B. schlagartig oder stark erhöht. Dies ist ein Zeichen für einen Bruch oder eine Rissbildung in dem Knetelement, so dass dann Alarm ausgelöst wird.

Das entsprechende Steuersignal wird dann dazu benutzt, z.B. den Antrieb der Welle eines Mischkneters abzuschalten oder Ein- und Austragsorgane für Edukt oder Produkt in oder aus einem Kneterraum abzuschalten, anzuschalten oder sonst wie zu beeinflussen oder auch um eine Beheizung des Kneterraums bzw. der Knetelemente abzuschalten oder zu beeinflussen.

**Bezugszeichenliste**

| | | | | | |
|---|---|---|---|---|---|
| 1 | Gehäuse | 34 | | 67 | |
| 2 | Knetelement | 35 | | 68 | |
| 3 | Knetelement | 36 | | 69 | |
| 4 | Welle | 37 | | 70 | |
| 5 | Antrieb | 38 | | 71 | |
| 6 | Ventilblock | 39 | | 72 | |
| 7 | Leitung | 40 | | 73 | |
| 8 | Überwachungseinricht ung | 41 | | 74 | |
| 9 | Pfeil | 42 | | 75 | |
| 10 | Knetkörper | 43 | | 76 | |
| 11 | Gehäuseflansch | 44 | | 77 | |
| 12 | Drehmomentsensor | 45 | | 78 | |
| 13 | Spanneinrichtung | 46 | | 79 | |
| 14 | Kanal | 47 | | | |
| 15 | Druckquelle | 48 | | | |
| 16 | Manometer | 49 | | | |
| 17 | Ventilblock | 50 | | | |
| 18 | Zuleitung | 51 | | | |
| 19 | Druckmittelleitung | 52 | | | |
| 20 | Durchflusssensor | 53 | | | |
| 21 | Druckminderer | 54 | | | |
| 22 | Steuergerät | 55 | | | |
| 23 | Drucksensor | 56 | | M | Mischkneter |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Behandeln von insbesondere viskos-pastösen Massen in einem Gehäuse (1) mit Knetelementen (2, 3), wobei zumindest ein Knetelement (2, 3) überwacht wird, wobei durch die Überwachung ein Steuersignal generiert wird, mit dessen Hilfe sich der Zustand des Knetelements eindeutig zuordnen lässt, wobei das Steuersignal aus einem Abfall eines Druckes des Druckmittels generiert, **dadurch gekennzeichnet, dass** bei Abfall des Druckes Druckmittel zugeführt wird, um einen vorbestimmten Druck aufrechtzuerhalten.

2. Verfahren nach Anspruch 1, **dadurch gekennzeichnet, dass** ein Steuersignal aus dem Abfall des Druckes des Druckmittels über die Zeit generiert wird.

3. Verfahren nach Anspruch 1, **dadurch gekennzeichnet, dass** ein Steuersignal aus einer Messung des Druckmitteldurchflusses in einer Zuleitung zum Knetelement (2, 3) ermittelt wird.

4. Verfahren nach wenigstens einem der vorhergehenden Ansprüche, **dadurch gekennzeichnet, dass** das überwachte Knetelement (2, 3) identifiziert wird.

5. Vorrichtung zum Behandeln von insbesondere viskos-pastösen Massen in einem Gehäuse (1) mit Knetelementen (2, 3), wobei zumindest ein Knetelement (2, 3) mit einer Überwachungseinrichtung (8) verbunden ist und das Knetelement (2) zumindest teilweise von zumindest einem Kanal (14) durchzogen ist, der mit einer Druckmittelquelle (15) in Verbindung steht, wobei der Kanal (14) über einen Ventilblock (6) mit der Druckmittelquelle (15) in Verbindung steht, wobei dem Ventilblock (6) bzw. einer Druckmittelleitung zur Druckmittelquelle (15) auch ein Drucksensor (16) zugeordnet ist, **dadurch gekennzeichnet, dass** in die Druckmittelleitung zur Druckmittelquelle zumindest ein Flusssensor eingeschaltet ist.

6. Vorrichtung nach Anspruch 5, **dadurch gekennzeichnet, dass** die Druckmittelleitungen einer Mehrzahl von Knetelementen (2, 3) in einem Ventilblock zusammengefasst sind.

## Claims

1. Method for treating in particular viscous-pasty compositions in a housing (1) with kneading elements (2, 3), at least one kneading element (2, 3) being monitored,
a control signal being generated by the monitoring, with the aid of which signal the state of the kneading element can be clearly assigned, the control signal being generated from a drop in a pressure of the pressure medium, **characterised in that** when there is a drop in the pressure, pressure medium is supplied in order to maintain a predetermined pressure.

2. Method according to claim 1, **characterised in that** a control signal is generated from the drop in the pressure of the pressure medium over time.

3. Method according to claim 1, **characterised in that** a control signal is determined from a measurement of the through flow of the pressure medium in a feed line to the kneading element (2, 3).

4. Method according to at least one of the preceding claims, **characterised in that** the monitored kneading element (2, 3) is identified.

5. Device for treating in particular viscous-pasty compositions in a housing (1) having kneading elements (2, 3), at least one kneading element (2, 3) being connected to a monitoring device (8) and the kneading element (2) being passed through at least partially by at least one channel (14) which is connected to a pressure medium source (15), the channel (14) being connected to the pressure medium source (15) via a valve block (6), a pressure sensor (16) also being assigned to the valve block (6) or to a pressure medium line to the pressure medium source (15), **characterised in that** at least one flow sensor is included in the pressure medium line to the pressure medium source.

6. Device according to claim 5, **characterised in that** the pressure medium lines of a plurality of kneading elements (2, 3) are combined in a valve block.

## Revendications

1. Procédé de traitement en particulier des matières visco-pâteuses dans un boîtier (1) avec des éléments de malaxage (2, 3), au moins un élément de malaxage (2, 3) étant surveillé,
dans lequel est généré, par la surveillance, un signal de commande à l'aide duquel peut être associé de manière univoque l'état de l'élément de malaxage, dans lequel le signal de commande est généré à partir d'une chute de pression du fluide sous pression, **caractérisé par le fait qu'**en cas de chute de pression est alimenté du fluide sous pression pour maintenir une pression prédéterminée.

2. Procédé selon la revendication 1, **caractérisé par le fait qu'**un signal de commande est généré dans le temps à partir de la chute de la pression du fluide sous pression.

3. Procédé selon la revendication 1, **caractérisé par le fait qu'**un signal de commande est déterminé à partir d'une mesure du débit du fluide sous pression dans une conduite d'alimentation vers l'élément de malaxage (2, 3).

4. Procédé selon au moins l'une des revendications précédentes, **caractérisé par le fait que** l'élément de malaxage surveillé (2, 3) est identifié.

5. Appareil pour le traitement en particulier des masses visco-pâteuses dans un boîtier (1) avec des éléments de malaxage (2, 3), au moins un élément de malaxage (2, 3) étant connecté à un dispositif de surveillance (8) et l'élément de malaxage (2) étant traversé au moins partiellement par au moins un canal (14) qui est en communication avec une source de fluide sous pression (15), le canal (14) étant en communication par l'intermédiaire d'un bloc de soupapes (6) avec la source de fluide sous pression (15), au bloc de soupapes (6) ou à la conduite de fluide sous pression vers la source de fluide sous pression (15) étant également associé un capteur de pression (16), **caractérisé par le fait que** dans la conduite de fluide sous pression vers la source de fluide sous pression est connecté au moins un capteur de flux.

6. Dispositif selon la revendication 5, **caractérisé par le fait que** les conduites de fluide sous pression d'une pluralité d'éléments de malaxage (2, 3) sont regroupées dans un bloc de soupapes.
